(19) Europäisches Patentamt
European Patent Office
Office européen des brevets

(11) EP 0 977 059 B1

## (12) EUROPÄISCHE PATENTSCHRIFT

(45) Veröffentlichungstag und Bekanntmachung des Hinweises auf die Patenterteilung:
**15.12.2004 Patentblatt 2004/51**

(51) Int Cl.⁷: **G02B 3/08**, B29D 11/00

(21) Anmeldenummer: **99112693.9**

(22) Anmeldetag: **02.07.1999**

(54) **Verfahren zur Herstellung einer Flächenlinse auf katadioptrischer Basis sowie nach diesem Verfahren hergestellte Flächenlinse**

Method for manufacturing a catadioptric flat lens and flat lens manufactured using this method

Méthode de fabrication d'une lentille plane catadioptrique et lentille plane fabriquée selon cette méthode

(84) Benannte Vertragsstaaten:
**DE FR GB IT**

(30) Priorität: **31.07.1998 DE 19834521**

(43) Veröffentlichungstag der Anmeldung:
**02.02.2000 Patentblatt 2000/05**

(73) Patentinhaber: **aqua signal Aktiengesellschaft Spezialleuchtenfabrik**
**28307 Bremen (DE)**

(72) Erfinder: **Scheer, Ulla**
**72827 Wannweil (DE)**

(74) Vertreter: **Heiland, Karsten, Dipl.-Ing. et al**
**Meissner, Bolte & Partner**
**Anwaltssozietät GbR**
**Hollerallee 73**
**28209 Bremen (DE)**

(56) Entgegenhaltungen:
**US-A- 5 404 869**

• **H.J. EICHLER ET AL.: "BERGMANN-SCHAEFER, Lehrbuch der Experimentalphysik, Band III Optik, 6. Auflage" 1974 , DE GRUYTER , BERLIN XP002151626 Kapitel I,14 * Seite 172, Zeile 29 - Seite 173, Zeile 15 ***
• **ROSSI M ET AL: "REFRACTIVE AND DIFFRACTIVE PROPERTIES OF PLANAR MICRO-OPTICAL ELEMENTS" APPLIED OPTICS,US,OPTICAL SOCIETY OF AMERICA,WASHINGTON, Bd. 34, Nr. 26, 10. September 1995 (1995-09-10), Seiten 5996-6007, XP000523025 ISSN: 0003-6935**
• **ERISMANN F: "DESIGN OF A PLASTIC ASPHERIC FRESNEL LENS WITH A SPHERICAL SHAPE" OPTICAL ENGINEERING,US,SOC. OF PHOTO-OPTICAL INSTRUMENTATION ENGINEERS. BELLINGHAM, Bd. 36, Nr. 4, 1. April 1997 (1997-04-01), Seiten 988-991, XP000700904 ISSN: 0091-3286**
• **D. VANDERWERF: "Approximating the Fresnel Lens" ELECTRO-OPTICAL SYSTEMS DESIGN, Bd. 14, Nr. 2, 1982, Seiten 47-51, XP002151625 Chicago, Illinois, USA**

## Beschreibung

Die Erfindung betrifft ein Verfahren zur Herstellung einer Flächenlinse auf katadioptrischer Basis mit stufenförmiger Eintrittsfläche, Reflektionsflächen und zumindest teilweise gekrümmter Austrittsfläche. Weiterhin betrifft die Erfindung eine Flächenlinse.

Aus der US 5 404 869 ist eine Flächenlinse bekannt, mit der die Lichtstrahlen einer punktförmigen Lichtquelle durch geeignete Strahlführung parallelisiert werden. Der besondere Vorteil der Linse besteht in der geringen Bauhöhe, dem großen Durchmesser und dem kurzen Abstand zwischen Linse und Lichtquelle. Möglich wird dies durch einen stufenförmigen Aufbau der Flächenlinse. In einem mittigen Bereich weist die Linse eine gekrümmte Eintrittsfläche und eine ebenfalls gekrümmte Austrittsfläche auf, vergl. Fig. 23 der Schrift. Außerhalb des mittigen Bereiches sind konzentrische Stufen angeordnet, beispielsweise 11 Stufen. Jede Stufe kann als prismatisches Element (oder Ringprisma) betrachtet werden und weist eine Eintrittsfläche (Oberseite) eine Reflektionsfläche (Unterseite) und eine Austrittsfläche auf. Oberseite und Unterseite sind jeweils eben, während die Austrittsfläche jeweils gekrümmt ist.

Für die Erzielung einer optimalen Lichtausbeute müssen die Lichtstrahlen exakt geführt werden. Entsprechend ist die Geometrie der einzelnen Stufen genau zu berechnen. In Kenntnis der optimalen Gestalt der einzelnen Stufen und des Mittenbereichs lassen sich Werkzeugmaschinen zur Herstellung einer entsprechenden Flächenlinse oder einer Gußform hierfür programmieren. Aufgrund der rotationssymmetrischen Ausbildung der Flächenlinse genügen für eine eindeutige Beschreibung der Form die Ermittlung der Daten eines radialen Querschnitts und zwar von der Linsenmitte bis zum Außenrand (oder umgekehrt).

Die Merkmale des erfindungsgemäßen Verfahrens sind Anspruch 1 entnehmbar.

Die beschriebene Vorgehensweise ermöglicht eine schnelle Bestimmung der kompletten äußeren Form der Flächenlinse für unterschiedliche Ausgangsdaten und verschiedene Anwendungszwecke.

Vorteilhafterweise werden folgende Randbedingungen zugrunde gelegt:

- die punktförmige Lichtquelle steht im Nullpunkt eines (xy) Koordinatensystems,
- das Mittenteil der Linse weist eine asphärische Eintrittsfläche und eine ebene Austrittsfläche auf,
- die Oberseiten bzw. Eintrittsseiten aller Stufen verlaufen parallel zur x-Richtung,
- der Eckpunkt (Schnittpunkt Oberseite bzw. Eintrittseite und Unterseite bzw. Reflektionsfläche) der äußersten Stufe (1. Stufe) liegt auf der y-Achse,
- jede Stufe nimmt Licht aus einem 5°-Winkelbereich auf.

Besonders vorteilhaft ist eine Vorgehensweise bei der ein Winkel der Reflektionsfläche zur Eintrittsfläche in jeder Stufe so gewählt wird, daß ein Strahlenabschnitt iii des äußeren Randstrahls a in diesem Bereich einen möglichst kleinen Winkel mit der Eintrittsfläche bildet. Dunkle Zonen nach dem Austritt des Lichts aus der Linse werden so weitgehend vermieden.

Für die Ermittlung der Daten der ersten Stufe stehen die Größen $\delta$,$flx_1$,$fly_1$ in Wechselwirkung zueinander. Entweder werden $\delta_1$ und $flx_1$ oder aber $flx_1$ und $fly_1$ vorgegeben und der jeweils andere Wert ermittelt. Bei Vorgabe von $\delta_1$ und $flx_1$ ergibt sich $fly_1$ durch Schnitt des an der Reflektionsfläche reflektierten Strahls als Abschnitt des inneren Randstrahls b der ersten Stufe mit der durch $flx_1$ definierten Ebene. Der Begriff "innerer" Randstrahl bezieht sich auf die Anordnung vor Eintritt der Strahlen in die Linse. Die der Mittelachse der Linse nächstliegenden Randstrahlen werden als innere Randstrahlen bezeichnet, die dem Umfang der Linse jeweils nächstliegenden Randstrahlen werden als äußere Randstrahlen bezeichnet. Innerhalb der Linse kreuzen sich die Randstrahlen, so daß der innere Randstrahl b der ersten, äußeren Stufe auf der Austrittsseite den äußersten Rand markiert.

Bei der Festlegung der Größen $flx_1$ und $fly_1$ kann von Schätz- oder Erfahrungswerten ausgegangen werden. Jedenfalls soll $flx_1$ wesentlich größer sein als die x-Koordinate für den Eckpunkt der ersten Stufe, ebenso soll $fly_1$ wesentlich größer sein als die y-Koordinate des Eckpunkts der ersten Stufe. Dabei legt $flx_1$ weitgehend die Dicke der Linse fest, während $fly_1$ den Durchmesser der Linse betrifft. Wichtig ist die Einhaltung der Eikonalbedingung innerhalb jeder Stufe. D. h., daß die Summen der optischen Weglängen der Strahlen innerhalb jeder Stufe übereinstimmen. Bekanntermaßen ergibt sich die optische Weglänge eines Lichtstrahls aus der geometrischen Weglänge multipliziert mit dem Brechungsindex. Im Normalfall ergeben sich drei unterschiedliche Zonen mit verschiedenen optischen Weglängen, nämlich Eintrittsseite (Luft), Linsenmaterial, Austrittsseite (Luft). Die geometrische Weglänge endet an einer Referenzebene, die irgendwo hinter der Austrittsseite der Linse angenommen werden kann und die naturgemäß senkrecht zur Mittelachse der Linse bzw. zur optischen Achse verläuft. Die Strahlführung wird dabei so berechnet, daß die einzelnen Lichtstrahlen parallel zueinander und senkrecht auf die Referenzebene auftreffen. Mit einer derartigen Linse ergibt sich ein Höchstmaß an Lichtausbeute bei gleichmäßiger Verteilung des Lichts. Denkbar ist auch eine Aufweitung des Lichtstrahls oder eine Fokussierung desselben. Die Referenzebene muß dann als - von der Lichtquelle aus gesehen - konkave oder konvexe Fläche angenommen werden.

Eine Besonderheit ist die Bestimmung der Daten der zweiten Stufe nach Festlegung der ersten Stufe. Hierzu werden zwei Iterationsschritte ineinander verschachtelt ausgeführt. Zunächst wird ein Schätzwert für die x-Koordinate des Eckpunkts $A_2$ der zweiten Stufe, nämlich $x_{A_2}$, angenommen. Da die Winkelbereiche, in denen die Stufen Licht aufnehmen bekannt sind, ebenso die Winkel $\alpha_{A_i}$ der Oberseiten der Stufen i, kann die y-Koordinate des Eckpunkts $A_2$ und damit der Punkt $(x_{A_2}, y_{A_2})$ errechnet werden. Danach wird der Winkel $\delta_2$ der Reflektionsfläche der zweiten Stufe iterativ ermittelt, bis ein Strahlabschnitt $y_{iii}$ für einen inneren Randstrahl b der zweiten Stufe auf dem Punkt mit den Koordinaten $(flx_2, fly_2)$ liegt, wobei $(flx_2, fly_2)$ der nächstliegenden Koordinate $(flx_1, fly_1)$ der ersten Stufe dem dortigen Randstrahl a entspricht. Schließlich wird der Winkel zwischen dem inneren Randstrahl b der zweiten Stufe und dem äußeren Randstrahl a der ersten Stufe vor Austritt aus der Linse überprüft und minimiert durch Variation von $x_{A_2}$ und anschließende Iteration von $\delta_2$. Sobald der Winkel $\delta_2$ der Reflektionsfläche der zweiten Stufe feststeht, können alle weiteren Koordinaten $(flx_2, fly_2)$ unter Beachtung der Eikonalbedingung (innerhalb der zweiten Stufe) ermittelt werden.

Die erfindungsgemäße Linse ist nach dem voranstehend beschriebenen Verfahren hergestellt. Die nach der Bestimmung der geometrischen Form durchzuführenden weiteren Herstellungsschritte können unterschiedlich sein. Wichtig in diesem Zusammenhang ist das für die Linse verwendete Material. Vorzugsweise wird Preßglas, Polycarbonat oder PMMA (Acryl) verwendet. Aufgrund der ermittelten Form der Linse kann eine Gußform für dieselbe hergestellt werden. So können die ermittelten Daten unmittelbar eine entsprechende Werkzeugmaschine ansteuern. Denkbar ist auch die Herstellung als Drehteil mit unter Berücksichtigung der ermittelten Daten durchzuführenden Dreh- und Poliervorgängen. So können beispielsweise durch Spanen die Oberflächen auf Vorder- und Rückseite der Linse bis auf ein Übermaß von $\frac{1}{100}$ Millimeter oder weniger bearbeitet und anschließend ein oder mehrere Poliervorgänge zur Erzielung der endgültigen Form durchgeführt werden.

Weitere Merkmale der Erfindung ergeben sich aus den Patentansprüchen und der Beschreibung im übrigen.

Nachfolgend wird ein Ausführungsbeispiel an Hand von Zeichnungen näher erläutert. Es zeigen:

Fig. 1    einen halben Querschnitt einer konstruierten Linse,

Fig. 2    die Linse in Draufsicht,

Fig. 3    Strahlenverläufe in.der Linse,

Fig. 4    eine Stufe der Linse im Querschnitt mit kennzeichnenden Größen in nicht maßstabsgerechter Darstellung,

Fig. 5    den halben Querschnitt der Zonenlinse mit Koordinatenangaben.

Es soll eine strahlenführende Flächenlinse 10 konstruiert werden, die das gesamte Licht einer Punktlichtquelle 11 aus einem offenen Halbraum sammelt und als paralleles Licht weiterleitet. Die Linse 10 besteht aus einer stufenförmig angeordneten Eintrittsfläche 12 und einer asphärisch gekrümmten Austrittsfläche 13. Die Berechnungen basieren auf den Grundlagen der geometrischen Optik unter Berücksichtigung der Eikonalbedingung (gleiche optische Weglängen). Als Lichtquelle wird eine LED-ND Diode (Wellenlänge $\lambda$ = 632 Nanometer) angenommen. Auf der Basis vorbestimmter Ausgangsparameter werden die für eine Fertigung der Linse erforderlichen Konstruktionsdaten ermittelt.

## A. Prinzipielle Form der Linse

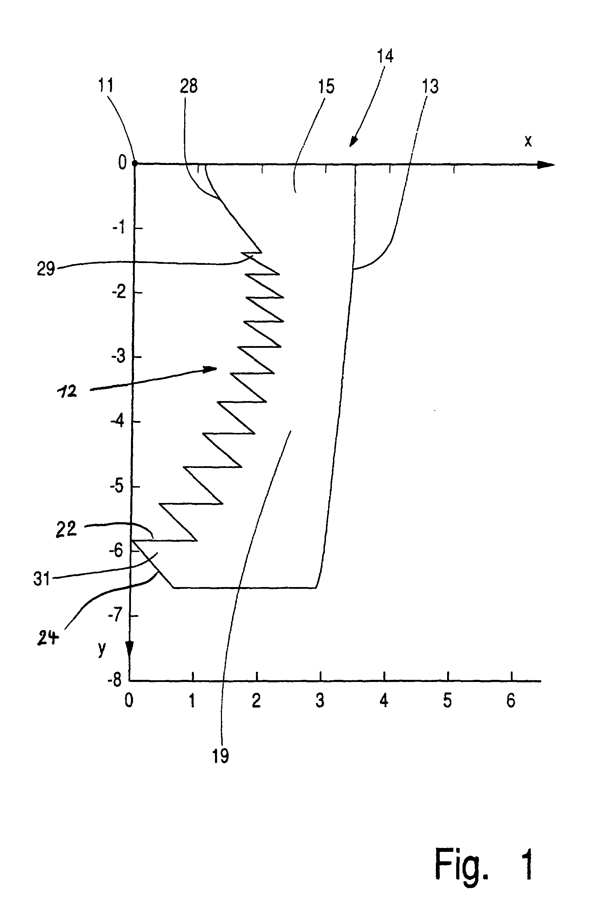

In Fig. 1 ist ein halber Querschnitt 14 der konstruierten Flächenlinse 10 dargestellt. Zur Berechnung wird die Punktlichtquelle 11 im Punkt (0,0) eines x, y-Koordinatensystems angenommen. Die der Lichtquelle 11 zugewandte Seite (Eintrittsfläche 12) der Linse 10 besteht aus einem asphärischen Mittelteil 15 und elf nach außen hin in ihrer Dimension zunehmenden Stufen, wobei die äußerste Stufe als Stufe 1 bezeichnet wird. Die Krümmung der Außenseite (Austrittsfläche 13) der Linse 10 wird über die Eikonaltheorie derart berechnet, daß die austretenden Strahlen hinter der Linse 10 parallel zur x-Achse verlaufen. Dabei ist die x-Achse zugleich Mittelachse der Linse 10.

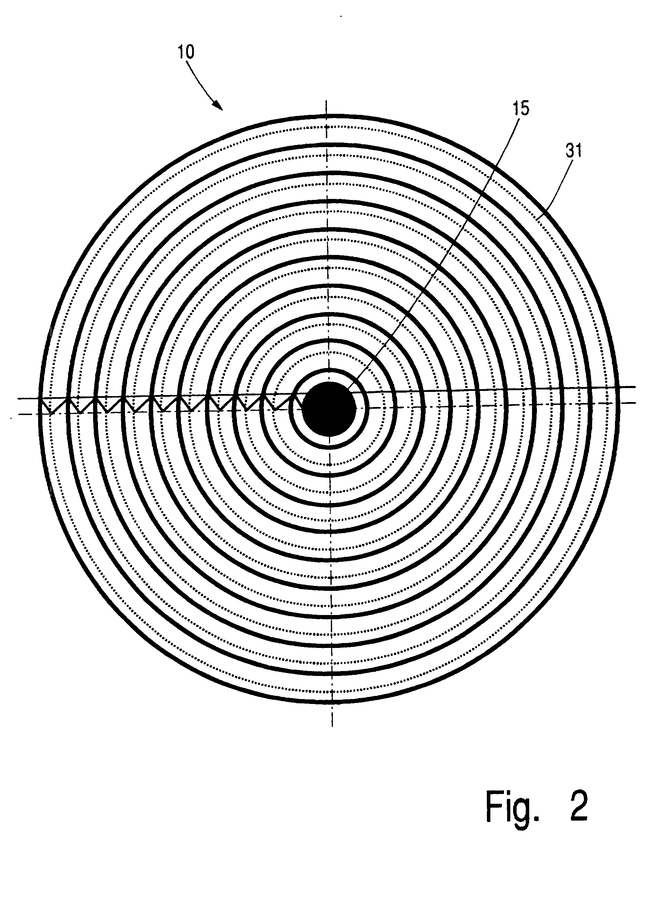

Die in Fig. 1 verwendete Skala ist in willkürlichen Einheiten angegeben, so daß zwar die Größenverhältnisse, nicht aber die realen Dimensionen der Linse 10 gezeigt sind. Diese lassen sich durch Wahl des Durchmessers der Linse 10 festlegen. Durch Rotation des Umrisses um die x-Achse erhält man die vollständige dreidimensionale Gestalt der Linse 10, wie in Fig. 2 in der Draufsicht dargestellt.

## B. Strahlenverlauf in der Linse

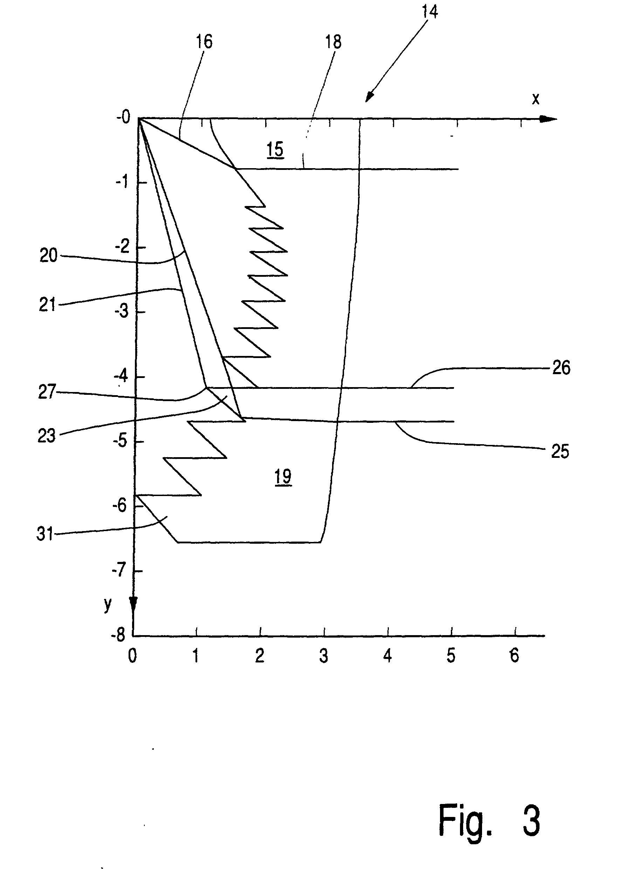

Ein Strahl 16, der im Mittenbereich 15 der Linse 10 auf die asphärische Kuppel 17 einfällt, wird in einen zur x-Achse parallel verlaufenden Strahl 18 gebrochen und trifft senkrecht auf die Austrittsfläche 13, siehe Fig. 3. Die im Außenbereich 19 der Linse 10 einfallenden Strahlen 20, 21 werden zunächst beim Eintritt an einer Oberseite 22 der entsprechenden Stufe 23 gebrochen, dann an einer Unterseite 24 der Stufe total reflektiert und verlassen als Parallelstrahlen 25, 26 nach erneuter Brechung an der in diesem Bereich gekrümmten Austrittsfläche 13 die Linse 10, siehe Fig. 1 und 3, in denen der beschriebene geometrisch-optische Verlauf dargestellt ist. Die in diesem Fall für die vierte Stufe 23 eingezeichneten Strahlenverläufe sind dabei als Grenzfälle (Randstrahlen) der innerhalb des von diesen Strahlen begrenzten Winkelbereichs einfallenden Strahlen zu betrachten. Ein auf eine Kante 27 (Eckpunkt) einer Zone bzw. Stufe treffender Lichtstrahl führt in der Praxis zu Streulicht.

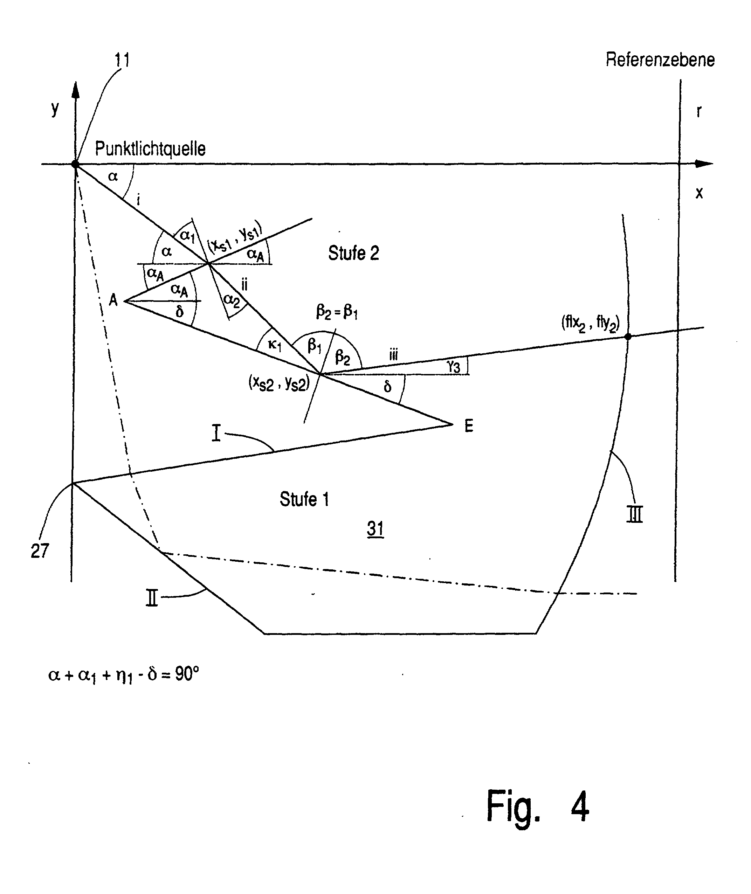

Im folgenden werden die die Form der Linse 10 und den Strahlenverlauf kennzeichnenden Parameter erläutert. Die Größen beziehen sich dabei auf den Querschnitt der rotationssymmetrischen Zonenlinse 10 entlang eines Durchmessers. Einige der Winkelgrößen und Koordinaten, die bei der Konstruktion der Stufen im Außenbereich 19 der Linse 10 verwendet werden, sind in der nicht maßstabsgerechten Fig. 4 dargestellt.

B. I. Mittenteil der Linse:

$(flx_M, fly_M)$: Koordinaten eines Punktes auf einer asphärischen Innenfläche 28 des Mittelteils 15

$\alpha_M$: Winkel zwischen dem von (0,0) ausgehenden und in $(flx_M, fly_M)$ einfallenden Strahl (z. B. Strahl 16) und der x-Achse.

In diesem Bereich verläuft die Austrittsfläche 13 der Linse 10 senkrecht zur x-Achse. Die x-Koordinate dieses Teils der Austrittsfläche wird durch den zur 11. Stufe 29 (bei insgesamt 11 Stufen) gehörenden Abschnitt der Austrittsfläche 13 bestimmt.

B. II. Stufenförmiger Bereich der Linse:

Die Oberseite 22 der jeweiligen Stufe wird mit I, die Unterseite 24, an der die Totalreflektion stattfindet, mit II bezeichnet, wobei diese Grenzflächen plan verlaufen, während der zugehörige Abschnitt der gekrümmten Austrittsfläche 13 mit III bezeichnet wird und aus der Eikonalbedingung zu berechnen ist, siehe Fig. 4. Ein Datenvektor mit den Einträgen $(flx_i, fly_i)$ beschreibt die Grenzfläche III der i-ten Stufe. $(x_{A_i}, y_{A_i})$ kennzeichnen die Koordinaten der Eckpunkte der i-ten Stufe im Querschnitt, während $(x_{E_i}, y_{E_i})$ die Eckpunkte im Querschnitt beim Übergang von der vorherigen zur Stufe i angeben. Die Oberseite 22 der i-ten Stufe schließt mit einer Parallelen zur x-Richtung einen Winkel $\alpha A_i$ ein, die Unterseite 24 mit einer Parallelen zur x-Achse einen Winkel $\delta_i$. Randstrahlen $a_i b_i$, die gerade noch von der i-ten Stufe erfaßt werden, treffen unter dem Winkel $\alpha_{a_i}$ bzw. $\alpha_{b_i}$ auf die Grenzfläche I der i-ten Stufe.

Zur Beschreibung des Strahlenverlaufes werden die folgenden Größen verwendet (der Index i kennzeichnet dabei die i-te Stufe), siehe insbesondere Fig. 4:

$\alpha_{1_i}$: Einfallswinkel zur Grenzfläche $I_i$

$\alpha_{2_i}$: Ausfallswinkel nach Brechung an Grenzfläche $I_i$

$\beta_{1_i}$: Einfallswinkel zur Grenzfläche $II_i$

$\beta_{2_i}$: Ausfallswinkel nach Totalreflektion an Grenzfläche $II_i$

$\gamma_{3_i}$ : Winkel des Lichtstrahls nach Totalreflektion an Grenzfläche $II_i$ (gemessen relativ zur x-Achse)

$(x_{S_{1i}}, y_{S_{1i}})$ geben die Koordinaten der Schnittpunkte der Strahlenabschnitte mit Grenzfläche $I_i$ an und entsprechend $(x_{S_{2i}}, y_{S_{2i}})$ die Koordinaten der Schnittpunkte der Strahlenabschnitte mit Grenzfläche $II_i$. Der Übersicht halber wurden in Fig. 4 die die Stufe kennzeichnenden Indizes bei den Winkelgrößen und Koordinaten weggelassen. Dafür bezeichnen die Angaben i, ii, iii in Fig. 4 die drei unterschiedlichen Abschnitte des Strahlenverlaufs von der Lichtquelle bis zur Grenzfläche III (Austrittsfläche 13).

Die Punktlichtquelle befindet sich in $(x_P, y_P)$ = 0,0. Es wird zunächst mit den Brechungsindizes $n_L = 1$ für Luft und $n_{PM}$ = 1,493 für PMMA (Acryl) bei der Wellenlänge $\lambda$ = 632 Nanometer gerechnet. Der Brechungsindex ist jedoch in der Rechnung variierbar.

C. Konstruktion der Linse

Ausgehend von weiter unten noch erläuterten Eingabeparametern wird die Form der Linse von außen nach innen berechnet.

Eingabe Parameter

Für die Berechnung der Linsenform ist die Vorgabe der folgenden Größen erforderlich:

$$\alpha_{A_i}, (x_{A_1}, y_{A_1})$$

Weiterhin muß festgelegt werden, in welchem Winkelbereich die einzelnen Stufen Licht aufnehmen sowie Koordinaten $(flx_1, fly_1)$ des äußersten Punktes des Abschnittes der Austrittsfläche 13, der zur ersten Stufe gehört, alternativ auch $\delta_1$ und $flx_1$. Mit diesem Wert wird praktisch die Dicke der Linse festgelegt. Die Anzahl der Stufen kann in gewissen Grenzen variiert werden (siehe weiter unten unter der Überschrift C. II. Mittenteil).

Für die hier konstruierte Linse wurde $\alpha_{A_i} = 0$ festgelegt, so daß die Oberseiten 22 aller Stufen parallel zur x-Richtung verlaufen. Jede Stufe nimmt an der entsprechenden Stelle Licht aus einem $5°$-Winkelbereich auf.

Im folgenden werden die theoretischen Grundlagen zur Konstruktion des stufenförmigen Bereiches und des Mittelteils 15 der Linse 10 und zur Simulation des Strahlenverlaufes dargestellt. Der Übersicht halber werden bei den Stufen die Winkelgrößen und Koordinaten ohne den die Stufe kennzeichnenden Index angegeben.

C. I. Stufenförmiger Bereich der Linse

Berechnung des Schnittpunktes des einfallenden Lichtstrahls mit der Oberseite einer Stufe

Nachfolgend sind Gleichungen (1) bis (31) zitiert. Diese sind auf gesonderten Blättern am Ende der Beschreibung wiedergegeben.

Ein Lichtstrahl, der mit der x-Achse einen Winkel $\alpha$ einschließt, trifft unter dem Winkel

$$\alpha_1 = \frac{\pi}{2} - \alpha - \alpha_A \qquad (1)$$

auf die Oberseite einer Stufe. Die Koordinaten des entsprechenden Schnittpunkts $(x_{S1}, y_{S1})$ erhält man aus dem Schnitt der Nullpunkts-Geraden $y_i$, die den ersten Abschnitt i des Strahlenverlaufes beschreibt, mit der Geraden $y_I$ der Seitenfläche I. Gerade $y_I$ verläuft durch den Eckpunkt $(x_A, y_A)$ mit der Steigung $\tan(\alpha_A)$.

Schnitt $y_i$ mit $y_I$:

$$y_1 = -(\tan \alpha)\, x \qquad (2)$$

$$y_I = (\tan \alpha_A)\, x + y_A - (\tan(\alpha_A))\, x_A \qquad (3)$$

$$\Rightarrow \quad x_{S_1} = \frac{-y_A + (\tan \alpha_A)\, x_A}{\tan \alpha + \tan(\alpha_A)} \qquad (4)$$

$$y_{S_1} = -\tan \alpha \; \frac{-y_A + (\tan \alpha_A)\, x_A}{\tan \alpha + \tan \alpha_A} \qquad (5)$$

Berechnung des Schnittpunkts des gebrochenen Lichtstrahls mit der Unterseite einer Stufe

Nach der Brechung an der Oberseite 22 der Stufe beim Eintritt in die Linse 10 trifft der Lichtstrahl auf die Unterseite 24 und wird dort total reflektiert. Der Strahlenabschnitt ii zwischen $(x_{S_1}, y_{S_1})$ und $(x_{S_2}, y_{S_2})$ hat die Steigung $m = -\tan(90° - \alpha_A - \alpha_2)$, wobei sich $\alpha_2 = \arcsin(n_L / n_{PM}) \sin \alpha_1$ nach dem Brechungsgesetz berechnen läßt. $(x_{S_2}, y_{S_2})$ ist der Schnittpunkt der Gerade ii mit der Seitenfläche II, beschrieben durch $y_{II}$:

$$y_{ii} = m\, x + y_{S_1} - m\, x_{S_1} \qquad (6)$$

$$y_{II} = -(\tan \delta) x + y_A + (\tan \delta) x_A \tag{7}$$

$$\Rightarrow \quad x_{S_2} = \frac{y_A + (\tan d) x_A - y_{S_1} + m\, x_{S_1}}{m + \tan\delta} \tag{8}$$

$$y_{S_2} = -(\tan \delta) x_{S_2} + y_A + (\tan \delta) x_A \tag{9}$$

Dabei ist $\delta$ der Winkel zwischen der Unterseite einer Stufe und einer Parallelen zur x-Achse (vergl. Fig. 4). Die Winkel $\delta$ und $\alpha_A$ ergeben zusammen den Innenwinkel einer Stufe. Die Berechnung von $\delta$ erfolgt auf numerischem Wege und wird mit Hilfe der Daten der vorherigen Stufe durchgeführt. Die Bestimmung von $\delta$ wird weiter unten unter der Überschrift "Sukzessive Konstruktion des stufenförmigen Bereiches" erläutert.

Strahlenverlauf nach der Totalreflektion an der Unterseite einer Stufe

Der Strahlenabschnitt iii nach der Totalreflektion an der Unterseite einer Stufe bis zur gekrümmten Außenfläche beginnt in $(x_{S_2}, y_{S_2})$ und hat die Steigung $\tan \gamma_3$:

$$y_{iii} = (\tan \gamma_3) x + y_{S_2} - (\tan \gamma_3) x_{S_2} \tag{10}$$

Bestimmung des Winkels $\gamma_3$ zwischen dem an Grenzfläche II total reflektierten Strahl und einer Parallelen zur x-Richtung:

$\beta_2$, $\gamma_3$ und $\delta$ bilden einen 90°-Winkel (vergl. Fig. 4).

$$\beta_2 + \gamma_3 + \delta = 90° \tag{11}$$

Totalreflektion:

$$\beta_2 = \beta_1$$

Der Winkel $\beta_1$ läßt sich über einen Hilfswinkel $\kappa_1$ ausdrücken:

$$\beta_1 = 90° - \kappa_1 \tag{12}$$

Winkelsumme im Dreieck:

$$\kappa_1 + \alpha_A + \delta + 90° + \alpha_2 = 180° \tag{13}$$

Ersetzung von $\alpha_2$ über das Brechungsgesetz liefert:

$$\beta_1 = \alpha_A + \delta + \arcsin\left(\frac{n_L}{n_{PM}} \sin \alpha_1\right) \tag{14}$$

Aus den Gleichungen (11) bis (14) ergibt sich für $\gamma_3$:

$$\tau_3 = 90° - \alpha_A - \arcsin\left(\frac{n_L}{n_{PM}} \sin \alpha_1\right) \qquad (15)$$

Der Endpunkt von Geradenabschnitt iii wird mit (flx, fly) bezeichnet und ist aus der Eikonalbedingung zu bestimmen.

Strahlenverlauf hinter der Linse

Nach dem Austritt aus dem Prismenelement soll der Strahlenverlauf parallel zur x-Achse sein. Dieser Strahlenabschnitt verläuft zwischen (flx, fly) und (r, fly), wobei r die x-Koordinate einer willkürlich gewählten Referenzebene ist.

Berechnung des Eikonals und der Grenzfläche III

Für einen in $(x_{S_1}, y_{S_1})$ auf die Stufe treffenden Strahl erhält man als zurückgelegten optischen Weg C vom Ausgangspunkt (Lichtquelle) bis zum Auftreffen auf die Referenzebene

$$C = n_L \sqrt{x_{S_1}^2 + y_{S_1}^2} + n_{PM} \sqrt{(x_{S_2} - x_{S_1})^2 + (y_{S_2} - y_{S_1})^2} +$$
$$+ n_{PM} \sqrt{(flx - x_{S_2})^2 + (fly - y_{S_2})^2} + n_L (r - flx) \qquad (16)$$

C wird als Konstante für alle auf eine Stufe einfallenden Lichtstrahlen festgelegt. Der Wert von C ändert sich von Stufe zu Stufe. Als Wert für C wird der optische Weg des Strahls b benutzt, der den Winkelbereich der auf eine Stufe einfallenden Strahlen zur Mitte hin begrenzt (siehe Fig. 3, mittlerer eingezeichneter Strahl 20):

$$C = n_L \sqrt{x_{S_{1b}}^2 + y_{S_{1b}}^2} + n_{PM} \sqrt{(x_{S_{2b}} - x_{S_{1b}})^2 + (y_{S_{2b}} - y_{S_{1b}})^2} +$$
$$+ n_{PM} \sqrt{(flx_b - x_{S_{2b}})^2 + (fly_b - y_{S_{2b}})^2} + n_L (r - flx_b) \qquad (17)$$

Die Lage der Referenzebene r kann dabei willkürlich festgelegt werden und hat keinen Einfluß auf die Form des zu berechnenden Prismenelementes. Die einzige Einschränkung ist, daß r ≥ flx gelten muß, das heißt, die Referenzebene liegt außerhalb der Linse. $flx_b$ und $fly_b$ lassen sich für die erste Stufe aus den Eingabeparametern entnehmen bzw. berechnen. Für jede weitere Stufe ergeben sich diese Größen aus den Daten der vorherigen Stufe. Die genaue Vorgehensweise zur Bestimmung $flx_b$ und $fly_b$ wird im nächsten Abschnitt beschrieben.

Mit Gl. (16) lassen sich die Koordinaten (flx, fly) der gekrümmten Austrittsfläche 13 für jede Stufe bestimmen. Dazu wird Gl. (16) nach flx aufgelöst. Da der Punkt (flx, fly) Endpunkt des Geradenabschnittes $y_{iii}$ ist, besteht nach G1. X ein analytischer Zusammenhang zwischen flx und fly:

$$fly = (\tan \gamma_3) \, flx + y_{S_2} - (\tan \gamma_3) \, x_{S_2} \qquad (18)$$

Einsetzen von Gl. (18) in Gl. (16) ergibt eine Gleichung in Abhängigkeit von flx, die analytisch nach flx aufgelöst werden kann:

$$flx = \frac{C - n_L \sqrt{x_{S_1} + y_{S_1}} - n_{PM} \sqrt{(x_{S_2} - x_{S_1})^2 + (y_{S_2} - y_{S_1})^2} + n_{PM} x_{S_2} \sqrt{1 + \tan^2 \gamma_3} - n_L}{n_{PM} \sqrt{1 + \tan^2 \gamma_3} - n_L} \qquad (19)$$

Die nach Gl. (18) und Gl. (19) berechneten Datenvektoren $(flx_i, fly_i)$, die den Verlauf des Abschnittes der Grenzfläche III zur Stufe i beschreiben, ergeben zusammen (bis auf den Mittelteil 15) die Austrittsfläche 13 der Linse. Dabei ist zu beachten, daß die Abschnitte ohne Versetzung aneinander anschließen. Die Voraussetzungen dafür sowie die

Bestimmung des Winkels $\delta$ und weiterer Größen, die sich jeweils aus den Daten der vorherigen Abschnitte ergeben, werden im nächsten Abschnitt beschrieben.

<u>Sukzessive Konstruktion des stufenförmigen Bereiches</u>

<u>1. Stufe</u>

Alle Strahlen, die einen Winkel $\alpha$ im Bereich von 85° bis 90° mit der x-Achse bilden, sollen auf die erste Stufe 31 treffen. Vorteilhafterweise ist die erste Stufe 31 die äußerste Stufe. Möglich ist aber auch ein Beginn der Berechnung mit einer anderen Stufe. Jedenfalls ist die zweite berechnete Stufe benachbart zur zuerst berechneten Stufe angeordnet. Aus $\alpha_A$ und $\alpha$ lassen sich nach Gl. (1) und dem Brechungsgesetz $\alpha_{1_1}$ und $\alpha_{2_1}$ berechnen (Index 1 für die erste Stufe). Mit $(x_{A_1}, y_{A_1})$ ergibt sich nach den G1. (4) und (5) $(x_{S_{11}}, y_{S_{11}})$. Für die Bestimmung von $(x_{S_{21}}, y_{S_{21}})$ nach G1. (8) und (9) ist die Kenntnis von $\delta_1$ erforderlich. Dazu wird $\delta_1$ in einem Iterationsverfahren variiert und für jeden Wert $(x_{S_{21b}}, y_{S_{21b}})$ und $\gamma_{3_{1b}}$ nach G1. (15) für den Randstrahl b der ersten Stufe ($\alpha = 85°$) berechnet. $\delta$ wird solange variiert, bis der durch die Eingabe vorgegebene Punkt $(flx_1, fly_1)$ auf dem nach Gleichung X gegebenen Strahlenabschnitt $y_{iii}$ für Randstrahl b liegt:

$$fly_1 = (\tan \gamma_{3_{1b}}) \, flx_1 + y_{S_{2_{1b}}} - (\tan \gamma_{3_{1b}}) \, x_{S_{2_{1b}}} \qquad (20)$$

bei den weiteren Stufen wird der Winkel $\delta$ auf eine entsprechende Art und Weise bestimmt, deren Ziel die Vermeidung von Dunkelzonen hinter der Linse ist. Dies wird weiter unten erläutert.

Mit

$$(x_{S_{1_{1b}}}, y_{S_{1_{1b}}}), \, (x_{S_{2_{1b}}}, y_{S_{2_{1b}}}), \, (flx_{1b}, fly_{1b}) = (flx_1, fly_1)$$

und einer willkürlich gewählten x-Koordinate r für die Referenzebene ist der Strahlenverlauf von Randstrahl b vorgegeben und es kann nach Gl. (17) der Wert des Eikonals für Stufe 1 berechnet werden. Mit diesem Wert werden für die erste Stufe nach Gl. (19) und Gl. (18) für jeden Winkel $\alpha$ im oben genannten Bereich die Koordinaten $(flx_1, fly_1)$ bestimmt, die in einen Datenvektor geschrieben werden, der somit den ersten Abschnitt der gekrümmten Außenfläche beschreibt. Der erste Eintrag in diesen Datenvektor ist dabei der Wert $(flx_{1a}, fly_{1a})$ der für den unteren einfallenden Randstrahl a der ersten Stufe berechnet wird. Der letzte Eintrag ist der Wert $(flx_{1b}, fly_{1b})$. Randstrahl a (Strahlen 21, 26 in Fig. 3) tritt aus der Linse als Parallelstrahl aus, der nach dem Linsendurchgang oberhalb des parallel austretenden Randstrahls b (Strahlen 20, 25 in Fig. 3) liegt.

Als Endpunkt $x_{E_1}, y_{E1}$ (des die Unterseite der Stufe 1 beschreibenden Geradenabschnitts $y_{II_1}$ (nach G1. (7)) wird der Punkt auf $y_{II_1}$ gewählt, dessen y-Koordinate dem Wert $fly_{1b}$ entspricht, d. h.:

$$y_{E_1} = fly_{1b} \qquad (21)$$

$$x_{E_1} = \frac{fly_{1b} - yA_1 - (\tan \delta_1) \, x_{A_1}}{- \tan \delta_1} \qquad (22)$$

<u>Weitere Stufen</u>

Die nächste Stufe soll alle in einem sich direkt an den Winkelbereich der vorherigen Stufe anschließenden Winkelbereich der Größe 5° einfallenden Strahlen aufnehmen. Dieser Bereich wird wieder von einem (modellhaften) unteren Randstrahl a (größeres $\alpha$) und einem oberen Randstrahl b (kleineres $\alpha$) begrenzt. Zunächst werden $\alpha_{1_{ib}}$ und $\alpha_{2_{ib}}$ bestimmt. Zur Bestimmung von $(x_{S_{1ib}}, y_{S_{1ib}})$ muß $(x_{A_i}, y_{A_i})$ bekannt sein. In einem dem Iterationsverfahren zur Bestimmung von $\delta_i$ übergeordneten Iterationsverfahren wird zunächst ein Wert für $x_{A_i}$ geschätzt. Die entsprechende y-Koordinate $y_{A_i}$ ergibt sich aus der Bedingung, daß die Ecke $(x_{A_i}, y_{A_i})$ dieser Stufe auf dem ersten Strahlenabschnitt des Randstrahls b des Winkelbereichs der vorherigen Stufe liegt. Dieser erste Strahlenabschnitt reicht von der Punktlichtquelle in (0,0) bis zum Schnittpunkt mit der Oberseite der vorherigen Stufe und läßt sich nach Gl. (2) bestimmen. Durch diese Bedingung ist gewährleistet, daß diese Stufe i nicht den Winkelbereich der auf Stufe i-1 einfallenden Strahlen abschattet. Nach Gl. (2) ergibt sich somit:

$$y_{A_1} = -(\tan \alpha_{(i-1)b})x_{A_i} \qquad (23)$$

Mit diesem Schätzwert für $(x_{A_i}, y_{A_i})$ wird wie oben für die erste Stufe beschrieben in einem Iterationsverfahren $\delta_i$ bestimmt. Dazu werden $(x_{S2ib}, y_{S2ib})$ und $\gamma_{3ib}$ für den Randstrahl b bestimmt und $\delta_i$ solange variiert, bis Randstrahl b dieser Stufe durch den oberen Randpunkt $(flx_{(i-1)a}, fly_{(i-1)a})$ des für die vorherige Stufe bestimmten Abschnitts der gekrümmten Außenfläche geht, d. h. dessen Koordinaten dem ersten Eintrag des Datenvektor für Grenzfläche III der vorherigen Stufe entsprechen. Anschaulich bedeutet dies, daß sich Randstrahl a der vorherigen Stufe und Randstrahl b der Stufe i in einem Punkt der Außenfläche schneiden, bevor sie beide zu Parallelstrahlen gebrochen werden. Bei der Simulation wird dabei für Randstrahl a der vorherigen Stufe der unterseitige Grenzwert der Krümmung für die Brechung an Grenzfläche III angenommen, für Randstrahl b der oberseitige Grenzwert der Krümmung. In der Praxis entsteht an dem Schnittpunkt der beiden Strahlen ein Knick nicht definierbarer Steigung. Alle unterhalb bzw. oberhalb dieses Schnittpunktes auftreffenden Strahlen werden jedoch an der entsprechend gekrümmten Fläche zu Parallelstrahlen gebrochen.

Würden sich Randstrahl a der vorherigen Stufe und Randstrahl b der Stufe i nicht in einem Punkt der Außenfläche, sondern innerhalb der Linse schneiden, dann würden nah benachbarte Strahlen von Randstrahl b der Stufe i auf eine Krümmung der Außenfläche treffen, die für Strahlen der vorherigen Stufe berechnet wurde und somit nicht zu Parallelstrahlen beim Austritt aus der Linse gebrochen werden.

Läge der Schnittpunkt außerhalb der Linse, so würde hinter der Linse theoretisch eine Zone entstehen, deren Breite dem vertikalen Abstand der Schnittpunkte der Randstrahlen mit Grenzfläche III entspräche und in die kein Licht eintreten würde. Diese Dunkelzonen jedoch wären bei geringer Ausdehnung in der Praxis aufgrund der endlichen Ausdehnung der Lichtquelle sowie durch Streulicht nicht erkennbar.

Die oben beschriebene Bedingung gewährleistet auch, daß die für die einzelnen Stufen berechneten Abschnitte der Linsenaußenfläche zusammen eine stetige Fläche bilden.

Nach der Bestimmung von $\delta_i$ wird, wie bereits für die erste Stufe beschrieben, der Eikonalwert für den Randstrahl b der i-ten Stufe nach Gl. (17) aus

$$(x_{S_{1_{ib}}} \; y_{S_{1_{ib}}}) \, , \, (x_{S_{2_{ib}}}, y_{S_{2_{ib}}}), (flx_{ib}, fly_{ib})$$

und r berechnet. Mit diesem Wert läßt sich der Strahlenverlauf des Randstrahls a dieser Stufe mit den G1. (8) bis (9) für den gewählten Schätzwert für $(x_{A_i}, y_{A_y})$ berechnen. Iterativ wird jetzt $x_{A_i}$ solange variiert, bis der Geradenabschnitt iii des Randstrahls a zwischen $(x_{S2ia}, y_{S2ia})$ und $(flx_{ia}, fly_{ia})$ parallel zur Oberseite der Stufe i verläuft (vergl. Fig. 3), d. h.

$$\tan \alpha_{A_1} = \frac{fly_{ia} - y_{S_{2_{ia}}}}{flx_{ia} - x_{S_{2_{ia}}}} \qquad (24)$$

Zu jedem neuen Wert für $x_{A_i}$ wird auch $\delta_i$ neu durch das oben beschriebene Iterationsverfahren bestimmt. Dadurch, daß Randstrahl a im Modell entlang der Oberseite der Stufe verläuft, wird eine maximale vertikale Ausdehnung des zur Stufe i bestimmten Abschnittes der Grenzfläche III erreicht, bei der noch alle auf Stufe i einfallenden Strahlen bis zur Außenfläche der Linse gelangen. Nach Bestimmung des optimalen Wertes für $x_{A_i}$ werden für alle Strahlen des von Randstrahl a und b aufgespannten Bereiches die Koordinaten $flx_i$, $fly_i$ mit der Eikonalbedingung bestimmt, die zusammen einen den entsprechenden Außenflächenabschnitt (Austrittsfläche 13) beschreibenden Datenvektor mit $(flx_{ia}, fly_{ia})$ als ersten und $(flx_{ib}, fly_{ib})$ als letzten Eintrag ergeben.

Die Lagen der tiefer liegenden Kanten E der Zonenlinse, in Fig. 4 beschrieben durch den Eckpunkt $(x_E, y_E)$ ergeben sich aus dem Schnitt der Oberseiten 22 einer Stufe i mit den Unterseiten 24 der nächsten Stufe i+1. Für die Koordinaten $(x_{E,(i-1)}, y_{E,(i-1)})$ des Schnittpunktes von Grenzfläche II der Stufe i und Grenzfläche I der Stufe i-1 erhält man mit Gl. (7) und Gl. (3):

$$x_{E_{i,(i-1)}} = \frac{y_{A_i} + (\tan \delta_i) x_{A_i} - y_{A_{i-1}} + (\tan \alpha_{A_{i-1}}) x_{A_{i-1}}}{\tan \alpha_{A_{i-1}} + \tan \delta_i} \qquad (25)$$

$$y_{E_{i,(i-1)}} = -(\tan \delta_i) x_{E_{i,(i-1)}} + y_{A_i} + (\tan \delta_i) x_{A_i} \qquad (26)$$

<u>Bemerkung zur Totalreflektion an Grenzfläche II</u>

An Grenzfläche II jeder Stufe soll der einfallende Strahl total reflektiert werden, d. h. $\beta_{1_i} \geq \beta_T$, wobei

$$\beta_T = \arcsin \frac{n_L}{n_{PM}} = 42,10998°$$

der materialabhängige Grenzwinkel für Totalreflektion ist. Randstrahl $a_i$ trifft im Vergleich mit den anderen Strahlen einer Stufe i unter dem kleinsten Winkel $\beta_{1_i}$ auf Grenzfläche II$_i$. Mit Gl. (14) und (1) ergibt sich als einschränkende Bedingung für den Winkel $\alpha_{a_i}$, den Randstrahl $a_i$ mit der x-Achse vor dem Auftreffen auf Grenzfläche I$_i$ einschließt:

$$\sin(90° - \alpha_{a_1} - \alpha_{A_i}) \geq \frac{n_{PM}}{n_L} \sin(\beta_T - \alpha_{A_i} - \delta_i) \tag{27}$$

Für jede Stufe wird die Totalreflektionsbedingung bezogen auf den Randstrahl $a_i$ überprüft.

<u>C. II. Mittenteil</u>

Zur Mitte hin werden die Stufen der Linse immer spitzwinkeliger, so daß es aus fertigungstechnischen Gründen nicht möglich ist, den stufenförmigen Bereich bis zur Mitte hin zu vervollständigen. Daher wird im Mittenbereich der Linse über die Eikonaltheorie eine asphärisch gekrümmte Innenfläche 28 berechnet. Die Außenfläche (Austrittsfläche 13) verläuft in diesem Bereich senkrecht zur x-Achse. Als y-Koordinate für diesen Planenteil der Austrittsfläche 13 wird der Wert $flx_{11a}$ genommen, d. h. die x-Koordinate des Punktes des Außenflächenabschnittes der letzten Stufe, an dem der Randstrahl a für die letzte Stufe austritt. Als Eikonalwert für den Mittenteil der Linse wird der Wert des Eikonals für einen Strahl berechnet, der in $(x_{S_{111b}}, y_{S_{111b}})$ auf die Linse trifft und dort zu einem Parallelstrahl zur x-Achse gebrochen werden soll, so daß er senkrecht auf den planen Teil der Außenfläche trifft:

$$C_M = n_L \sqrt{x_{S_{1_{11b}}}^2 + y_{S_{1_{11b}}}^2} + n_{PM}(flx_{11a} - x_{S_{1_{11b}}}) + n_L(r - flx_{11a}) \tag{28}$$

Damit werden die Koordinaten $(flx_M, fly_M)$ des Mitteninnteils (Innenfläche 28) berechnet. Ein Strahl, der im Mittenbereich auf die Linse trifft, schließt mit der x-Achse einen Winkel $\alpha_M$ ein:

$$\tan \alpha_M = \frac{fly_M}{flx_M} \tag{29}$$

Der Eikonalwert dieses Strahls ergibt sich zu:

$$C = n_L \sqrt{flx_M{}^2 + fly_M{}^2} + n_{PM} (flx_{11a} - flx_M) + nL(r - flx_{11a}) \tag{30}$$

Einsetzen von $C_M$ nach Gl. (28) und $fly_M$ nach Gl. (29) in Gl. (30) sowie Auflösen nach $flx_M$ ergibt:

$$flx_M = \frac{C_M - flx_{11a}(n_{PM} - n_L) - n_L \cdot r}{n_L \sqrt{1 + (\tan \alpha_M)^2} - n_{PM}} \tag{31}$$

Die zugehörige y-Koordinate $fly_M$ kann aus G1. (29) berechnet werden.

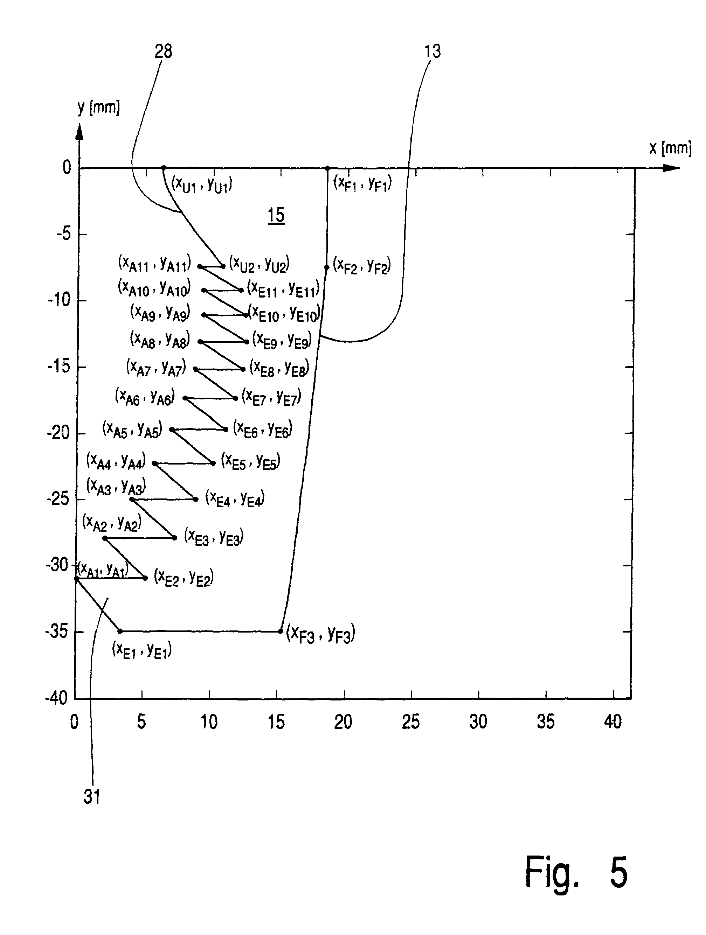

Abbildung 5 in Verbindung mit der nachfolgenden Tabelle offenbart reale Daten einer nach dem erfindungsgemäßen Verfahren herzustellenden Linse. Ebenso wie in Fig. 1 und 3 ist in Fig. 5 der halbe Querschnitt der Linse dargestellt. Die Linse erhält man durch Rotation um die x-Achse. Der Gesamtdurchmesser der Linse beträgt 70 mm. Im Mittenbereich 15 der Linse zwischen $(x_{F1}, y_{F1})$ und $(x_{F2}, y_{F2})$ verläuft die äußere Grenzfläche senkrecht zur x-Achse. Die Koordinaten der gekrümmten Außenfläche (Austrittsfläche 13) und des asphärisch gekrümmten Mittenteils 15 der Linse sind nicht angegeben, können aber wie oben angegeben berechnet werden.

Koordinaten (in mm) und Innenwinkel der Stufen:

$x_{A1}$ = 0.0000000, $y_{A1}$ = -31.0593937
$x_{A2}$ = 2.4537456, $y_{A2}$ = -28.0464401
$x_{A3}$ = 4.4210187, $y_{A3}$ = -25.0728429
$x_{A4}$ = 5.9873530, $y_{A4}$ = -22.3451056
$x_{A5}$ = 7.2168987, $y_{A5}$ = -19.8282662
$x_{A6}$ = 8.1524226, $y_{A6}$ = -17.4829267
$x_{A7}$ = 8.8206540, $y_{A7}$ = -15.2778208
$x_{A8}$ = 9.2269386, $y_{A8}$ = -13.1774340
$x_{A9}$ =9.3766225, $y_{A9}$ =-11.1746235
$x_{A10}$ =9.2429762, $y_{A10}$ =-9.2429762
$x_{A11}$ = 8.8741125, $y_{A11}$=-7.4462645
$x_{E1}$ = 3.8724230, $y_{E1}$ =-35.0000000
$x_{E2}$ = 5.6454293, $y_{E2}$ = -31.0593937
$x_{E3}$ = 7.7632058, $y_{E3}$ = -28.0464401
$x_{E4}$ = 9.2369917, $y_{E4}$ = -25.0728429
$x_{E5}$ = 10.3946378, $y_{E5}$ = -22.3451056
$x_{E6}$ = 11.2897853, $y_{E6}$ = -19.8282662
$x_{E7}$ = 11.9454328, $y_{E7}$ = -17.4829267
$x_{E8}$ = 12.3751453, $y_{E8}$ =-15.2778208
$x_{E9}$ = 12.5521130, $y_{E9}$ =-19.1774340
$x_{E10}$ =12.4769248, $y_{E10}$ =-11.1746235
$x_{E1}$ =12.0731980, $y_{E11}$ =-9.2429762
$x_{M2}$ = 10.6343678, $y_{M2}$ = -7.4462645
$x_{F3}$ =16.0375527, $y_{F3}$ =-35.0000000
$\delta_1$ = 455000000°
$\delta_2$ = 43.3500000°
$\delta_3$ = 41.6600000°
$\delta_4$ = 40.0100000°
$\delta_5$ = 38.3800000°
$\delta_6$ = 36.7800000°
$\delta_7$ = 352100000°
$\delta_8$ = 33.7100000°
$\delta_9$ = 32.2400000°
$\delta_{10}$ = 30.8500000°
$\delta_{11}$ = 29.3200000°

**Bezugszeichenliste:**

| 10 | Flächenlinse |
| 11 | Punktlichtquelle |
| 12 | Eintrittsfläche |
| 13 | Austrittsfläche |
| 14 | halber Querschnitt |
| 15 | Mittelteil |
| 16 | Strahl |
| 17 | Kuppel |
| 18 | Strahl |
| 19 | Außenbereich |
| 20 | Strahl |
| 21 | Strahl |

| 22 | Oberseite |
|----|-----------|
| 23 | Stufe |
| 24 | Unterseite |
| 25 | Strahl |
| 26 | Strahl |
| 27 | Kante |
| 28 | Innenfläche |
| 29 | 11. Stufe |
| 30 | |
| 31 | 1. Stufe |
| A | Kante |
| C | optischer Weg |
| E | Kante |
| I | Oberseite |
| II | Unterseite |
| III | Außenfläche |
| r | Referenzebene |
| i | Stufe |
| $\alpha$ | Abstrahlwinkel relativ zur x-Achse |
| $\alpha A$ | Winkel der Oberseite I relativ zur x-Achse |
| $\alpha 1$ | Einfallswinkel auf Grenzfläche I |
| $\alpha 2$ | Ausfallswinkel an Grenzfläche I |
| $\beta 1$ | Einfallswinkel auf Grenzfläche II |
| $\beta 2$ | Ausfallswinkel an Grenzfläche II |
| $\gamma 3$ | Winkel des Lichtstrahls nach Totalreflektion an Grenzfläche II relativ zur x-Achse |
| $\delta$ | Winkel der Unterseite 24 mit der X-Achse |
| $\kappa_1$ | Hilfswinkel |
| $(flx_i, fly_i)$ | Koordinate entlang der Grenzfläche III der i-ten Stufe |
| $(x_{A_i}, y_{A_i})$ | Koordinate des Eckpunkts der i-ten Stufe im Querschnitt |
| $(x_{E_i}, y_{E_i})$ | Koordinate des Eckpunkts im Querschnitt beim Übergang von der Stufe i-1 zur Stufe i |

## Patentansprüche

**1.** Verfahren zur Herstellung einer Flächenlinse auf katadioptrischer Basis mit stufenförmiger Eintrittsfläche (12), Reflektionsflächen und zumindest teilweise gekrümmter Austrittsfläche (13), wobei die Form der Flächenlinse (10) wie folgt bestimmt wird:

a) ein Querschnitt (radialer Querschnitt 14) mit einer Querschnittsebene entlang einer Mittelachse (x-Achse) und einer hiervon ausgehenden radialen Richtung wird stufenweise bestimmt, und zwar zunächst für eine beliebige erste Stufe, dann für die hierzu benachbarten Stufen, danach sukzessiv für alle weiteren benachbarten Stufen bis die Querschnitte der einzelnen Stufen alle bestimmt sind,

b) ausgehend von

- vorbestimmten Winkeln $\alpha_{A_i}$ von Eintrittsseiten der Stufen relativ zu der Mittelachse (x-Achse) der Linse,
- den Koordinaten $(x_{A_1}, y_{A_1})$ eines Eckpunktes $A_1$ - Schnittpunkt von Eintrittsseite und Reflektionsfläche der ersten Stufe bezogen auf den Ort (0,0) einer punktförmigen Lichtquelle (11),
- den Winkelbereichen, in welchen die einzelnen Stufen (i) Licht aufnehmen,
- einer Koordinate $flx_1$ des äußersten Punktes $(flx_1, fly_1)$ des Abschnitts der Austrittsfläche (13) der zur ersten Stufe (i=1) gehört,
- und einem Winkel $\delta_1$ einer Reflektionsfläche der ersten Stufe relativ zur Mittelachse,

werden zunächst die Koordinate $fly_1$ des äußersten Punktes $(flx_1, fly_1)$ und die weiteren Koordinaten $(flx_1, fly_1)$ der Austrittsfläche (13) für die erste Stufe unter Beachtung der Eikonalbedingung (gleiche optische Weglängen der Strahlen innerhalb der Stufe) ermittelt und zwar für eine der gewünschten Genauigkeit entsprechende Anzahl an Lichtstrahlen, wobei ein Winkel zwischen Reflektionsfläche und Eintrittsfläche so gewählt wird, dass ein Strahlenabschnitt iii des äußeren Randstrahls a in diesem Bereich einen möglichst kleinen Winkel mit der Eintrittsfläche bildet,
oder

c) ausgehend von

- vorbestimmten Winkeln $\alpha_{A_i}$ von Eintrittsseiten der Stufen relativ zu einer Mittelachse (x-Achse) der Linse,
- den Koordinaten $(x_{A_1}, y_{A_1})$ eines Eckpunktes $A_1$ der ersten Stufe bezogen auf den Ort (0,0) einer punktförmigen Lichtquelle (11),
- den Winkelbereichen, in welchen die einzelnen Stufen (i) Licht aufnehmen,
- und Koordinaten eines äußersten Punktes $(flx_1, fly_1)$ des Abschnitts der Austrittsfläche (13) der zur ersten Stufe (i=1) gehört,

werden zunächst der Winkel $\delta_1$ einer Reflektionsfläche der ersten Stufe relativ zur x-Achse und die weiteren Koordinaten $(flx_1, fly_1)$ der Austrittsfläche (13) für die erste Stufe unter Beachtung der Eikonalbedingung ermittelt und zwar für eine der gewünschten Genauigkeit entsprechende Anzahl an Lichtstrahlen, wobei ein Winkel zwischen Reflektionsfläche und Eintrittsseite so gewählt wird, dass ein Strahlenabschnitt iii des äußeren Randstrahls a in diesem Bereich einen möglichst kleinen Winkel mit der Eintrittsfläche bildet,

d) anschließend, d.h. nach Durchführung des Schrittes b) oder c), werden auf der Basis der für die erste Stufe ermittelten Daten die Daten einer zweiten Stufe, dann einer dritten Stufe, usw., insgesamt für alle Stufen, ermittelt, wobei ein Winkel zwischen Reflektionsfläche und Eintrittsseite in jeder Stufe so gewählt wird, dass ein Strahlenabschnitt iii des äußeren Randstrahls a in diesem Bereich einen möglichst kleinen Winkel mit der Eintrittsfläche bildet.

e) schließlich werden für einen keine Reflektionsflächen aufweisenden Mittenbereich (Mittelteil 15) der Linse (10) die Daten einer gekrümmten Eintrittsfläche (Innenfläche 28) unter Beachtung der Eikonalbedingung und unter Vorgabe der Austrittsfläche (13) ermittelt,

f) die komplette äußere Form der Linse (10) wird durch Rotation des radialen Querschnitts (14) um eine Mittelachse (x-Achse) bestimmt.

2. Verfahren nach Anspruch 1, **dadurch gekennzeichnet, dass** der radiale Querschnitt stufenweise, nämlich mit der äußersten Stufe 1 beginnend und Stufe für Stufe nach innen fortschreitend bestimmt wird.

3. Verfahren nach Anspruch 1 oder 2, **dadurch gekennzeichnet, dass** folgende Bedingungen vorgegeben werden:

- die Winkel $\alpha_{A_i}$ von Eintrittsseiten (22) aller Stufen (i) relativ zur Mittelachse (x-Achse) sind gleich 0,

- Querschnitte der Eintrittsseiten und Reflektionsflächen sind eben, wobei die Querschnitte entlang der Mittelachse (x-Achse) der Linse (10) und zugleich in radialer Richtung verlaufen.

4. Verfahren nach Anspruch 1, 2 oder 3, **dadurch gekennzeichnet, dass** der Winkel $\delta_1$ der Reflektionsfläche relativ zur Mittelachse (x-Achse) iterativ ermittelt wird und zwar durch Variation, bis der Strahlenabschnitt iii zwischen der Reflektionsfläche und der Austrittsfläche (13) für den inneren Randstrahl b dieser ersten Stufe auf dem Punkt mit den Koordinaten $(flx_1, fly_1)$ liegt.

5. Verfahren nach Anspruch 4, **dadurch gekennzeichnet, dass** beim Übergang von einer ersten Stufe zur benachbarten (inneren) zweiten Stufe zunächst ein Schätzwert der x-Koordinate des Eckpunktes $A_2$ der zweiten Stufe, nämlich $x_{A_2}$ angenommen wird, dass aufgrund der vorbestimmten Winkelbereiche, in denen die Stufen Licht aufnehmen und aufgrund der vorbestimmten Winkel $\alpha_{A_i}$ der Oberseiten der Stufen i die y-Koordinate vom Eckpunkt $A_2$ und damit der erste Punkt $(x_{A_2}, y_{A_2})$ errechnet werden,
dass dann der Winkel $\delta_2$ der Reflektionsfläche der zweiten Stufe relativ zur x-Achse iterativ ermittelt wird, bis der Strahlenabschnitt iii für einen inneren Randstrahl b der zweiten Stufe auf dem Punkt mit den Koordinaten $(flx_2, fly_2)$ liegt, wobei dieser Punkt $(flx_2, fly_2)$ der nächstliegenden Koordinate $(flx_1, fly_1)$ der ersten Stufe entsprechen soll, dass der Winkel zwischen dem inneren Randstrahl b der zweiten Stufe und dem äußeren Randstrahl a der ersten Stufe vor Austritt aus der Linse überprüft und minimiert wird durch Variation von $x_{A_2}$ und anschließende Iteration von $\delta_2$,
und dass dann unter Beachtung der Eikonalbedingung die weiteren Punkte $(flx_2, fly_2)$ der zweiten Stufe ermittelt werden.

6. Verfahren nach mindestens einem der voranstehenden Ansprüche, **dadurch gekennzeichnet, dass** der Winkel $\delta_1$ der Reflektionsfläche der ersten Stufe relativ zur x-Achse - bei rechtem Winkel zwischen äußerem Randstrahl a und Eintrittsfläche (12) größer als 45°, jedoch möglichst dicht an 45° gewählt wird.

7. Verfahren nach mindestens einem der voranstehenden Ansprüche, **dadurch gekennzeichnet, dass** der Mittenbereich (Mittelteil 15) der Linse (10) eine ebene Austrittsfläche (13) aufweist.

8. Verfahren nach mindestens einem der voranstehenden Ansprüche, **dadurch gekennzeichnet, dass** der Mittenbereich (Mittelteil 15) der Linse (10) eine Austrittsfläche (13) aufweist, die in Fortsetzung der einzelnen Stufen konvex gekrümmt ist.

9. Flächenlinse hergestellt in einem Verfahren nach einem oder mehreren der Ansprüche 1 bis 8.


**Claims**

1. Method for producing a flat lens on a catadioptric basis having a staged entrance surface (12), reflecting surfaces and an at least partially curved exit surface (13), the shape of the flat lens (10) being determined as follows:

   a) a cross section (radial cross section 14) with a cross-section plane along a central axis (x-axis) and a radial direction starting therefrom is determined in a stagewise fashion, specifically firstly for an arbitrary first stage, then for the stages adjacent thereto, and thereafter successively for all further adjacent stages until the cross sections of the individual stages have all been determined,

   b) starting from

   - predetermined angles $\alpha_{A_i}$ of entrance sides of the stages relative to the central axis (x-axis) of the lens,
   - the coordinates $(x_{A_1}, y_{A_1})$ of a corner point $A_1$ - point of intersection of entrance side and reflecting surface of the first stage referred to the location (0,0) of a punctiform light source (11),
   - the angular ranges in which the individual stages (i) receive light,
   - a coordinate $flx_1$ of the outermost point $(flx_1, fly_1)$ of the section of the exit surface (13) which belongs to the first stage (i=1),
   - and an angle $\delta_1$ of a reflecting surface of the first stage relative to the central axis,

   firstly the coordinates $fly_1$ of the outermost point $(flx_1, fly_1)$ and the further coordinates $(flx_1, fly_1)$ of the exit surface (13) are determined for the first stage taking account of the eikonal condition (same optical path lengths of the beams within the stage), specifically for a number of light beams corresponding to the desired accuracy, an angle between the reflecting surface and entrance surface being selected such that a beam section iii of the outer edge beam a forms with the entrance surface in this region an angle which is as small as possible, or

   c) starting from

   - predetermined angles $\alpha_{A_i}$ of entrance sides of the stages relative to a central axis (x-axis) of the lens,
   - the coordinates $(x_{A_1}, y_{A_1})$ of a corner point $A_1$ of the first stage referred to the location (0,0) of a punctiform light source (11),
   - the angular ranges in which the individual stages (i) receive light,
   - and coordinates of an outermost point $(flx_1, fly_1)$ of the section of the exit surface (13) which belongs to the first stage (i=1),

   firstly the angle $\delta_1$ of a reflecting surface of the first stage relative to the x-axis and the further coordinates $(flx_1, fly_1)$ of the exit surface (13) are determined for the first stage taking account of the eikonal condition, specifically for a number of light beams corresponding to the desired accuracy, an angle between the reflecting surface and entrance surface being selected such that a beam section iii of the outer edge beam a forms with the entrance surface in this region an angle which is as small as possible,

d) subsequently, that is to say after carrying out step b) or c), the data determined for the first stage are used as a basis for determining the data of a second stage, then of a third stage, etc, overall for all the stages, an angle between refracting surface and entrance surface being selected in each stage such that a beam section iii of the outer edge beam a forms with the entrance surface in this region an angle which is as small as possible,

e) finally, for a middle region (middle part 15) of the lens (10) having no reflecting surfaces the data of a curved entrance surface (inner surface 28) are determined taking account of the eikonal condition and with the exit surface (13) prescribed, and

f) the complete outer shape of the lens (10) is determined by rotation of the radial cross section (14) about a central axis (x-axis).

2. Method according to Claim 1, **characterized in that** the radial cross section is determined in a stagewise fashion, specifically starting with the outermost stage 1 and stage by stage inwardly progressively.

3. Method according to Claim 1 or 2, **characterized in that** the following conditions are prescribed:

- the angles $\alpha_{A_i}$ of the entrance sides (22) of all the stages (i) relative to the central axis (x-axis) are equal to 0,

- cross sections of the entrance sides and reflecting surfaces are plane, the cross section running along the central axis (x-axis) of the lens (10) and simultaneously in a radial direction.

4. Method according to Claim 1, 2 or 3, **characterized in that** the angle $\delta_1$ of the reflecting surface relative to the central axis (x-axis) is determined iteratively, specifically by variation until the beam section iii between the reflecting surface and the exit surface (13) for the inner edge beam b of this first stage lies on the point with the coordinates $(flx_1, fly_1)$.

5. Method according to Claim 4, **characterized in that** upon transition from a first stage to the adjacent (inner) second stage an estimated value of the x-coordinate of the corner point $A_2$ of the second stage, specifically $x_{A_2}$, is initially assumed, **in that** the y-coordinate of the corner point $A_2$, and thus the first point $(x_{A_2}, y_{A_2})$, are calculated on the basis of the predetermined angular ranges in which the stages receive light, and on the basis of the predetermined angle $\alpha_{A_i}$ of the top sides of the stages i,
**in that** then the angle $\delta_2$ of the reflecting surface of the second stage relative to the x-axis is determined iteratively until the beam section iii for an inner edge beam b of the second stage lies on the point with the coordinates $(flx_2, fly_2)$, it being intended that this point $(flx_2, fly_2)$ should correspond to the adjacent coordinates $(flx_1, fly_1)$ of the first stage,
**in that** the angle between the inner edge beam b of the second stage and the outer edge beam a of the first stage is checked before exit from the lens and minimized by variation of $x_{A_2}$ and the subsequent iteration of $\delta_2$,
and **in that** the further points $(flx_2, fly_2)$ of the second stage are then determined taking account of the eikonal condition.

6. Method according to at least one of the preceding claims, **characterized in that** the angle $\delta_1$ of the reflecting surface of the first stage relative to the x-axis is selected - given a right angle between the outer edge beam a and entrance surface (12) - to be greater than 45°, but as close as possible to 45°.

7. Method according to at least one of the preceding claims, **characterized in that** the middle region (middle part 15) of the lens (10) has a plane exit surface (13).

8. Method according to at least one of the preceding claims, **characterized in that** the middle region (middle part 15) of the lens (10) has an exit surface (13) which is convexly curved in continuation of the individual stages.

9. Flat lens produced using a method according to one or more of Claims 1 to 8.

**Revendications**

1. Procédé de réalisation d'une lentille à échelons à base catadioptrique ayant une surface d'entrée à échelons (12), des surfaces réfléchissantes et une surface de sortie au moins en partie courbe (13), la forme de la lentille à échelons (10) étant déterminée de la manière suivante :

a) une section (section radiale (14) avec un plan de section le long d'un axe (axe x) et d'une direction radiale partant de celui-ci est déterminée par échelons, à savoir d'abord pour un premier échelon quelconque, ensuite pour les échelons voisins de celui-ci, puis successivement pour tous les autres échelons voisins jusqu'à ce que les sections des différents échelons soient toutes déterminées,

b) à partir

- d'angles prédéterminés $\alpha_{Ai}$ entre des côtés d'entrée des échelons et l'axe (axe x) de la lentille,
- des coordonnées $(x_{A1}, y_{A1})$ d'un point de coin $A_1$, point d'intersection du côté d'entrée et de la surface réfléchissante, du premier échelon par rapport à l'endroit (0, 0) d'une source lumineuse ponctuelle (11),
- des domaines angulaires dans lesquels les différents échelons (i) reçoivent de la lumière,
- d'une coordonnée $flx_1$ du point extrême $(flx_1, fly_1)$ de la partie de la surface de sortie (13) qui appartient au premier échelon (i = 1), et
- d'un angle $\delta_1$ entre une surface réfléchissante du premier échelon et l'axe

sont d'abord déterminées la coordonnée $fly_1$ du point extrême $(flx_1, fly_1)$ et les autres coordonnées $(flx_1, fly_1)$ de la surface de sortie (13) pour le premier échelon avec observation de la condition eiconale (chemins optiques égaux des rayons à l'intérieur de l'échelon), ce pour un nombre de rayons lumineux correspondant à la précision désirée), l'angle entre la surface réfléchissante et la surface d'entrée étant choisi de façon qu'une partie iii du rayon marginal extérieur a fasse dans cette zone un angle aussi petit que possible avec la surface d'entrée,
ou

c) à partir

- d'angles prédéterminés $\alpha_{Ai}$ entre des côtés d'entrée des échelons et l'axe (axe x) de la lentille,
- des coordonnées $(x_{A1}, y_{A1})$ d'un point de coin $A_1$ du premier échelon par rapport à l'endroit (0, 0) d'une source lumineuse ponctuelle (11),
- des domaines angulaires dans lesquels les différents échelons (i) reçoivent de la lumière, et
- de coordonnées d'un point extrême $(flx_1, fly_1)$ de la partie de la surface de sortie (13) qui appartient au premier échelon (i = 1)

sont d'abord déterminés l'angle $\delta_1$ entre une surface réfléchissante du premier échelon et l'axe x et les autres coordonnées $(flx_1, fly_1)$ de la surface de sortie (13) pour le premier échelon avec observation de la condition eiconale, ce pour un nombre de rayons lumineux correspondant à la précision désirée, l'angle entre la surface réfléchissante et le côté d'entrée étant choisi de façon qu'une partie iii du rayon marginal extérieur a fasse dans cette zone un angle aussi petit que possible avec la surface d'entrée,

d) ensuite, c'est-à-dire après exécution de l'étape b) ou c), sont déterminées sur la base des caractéristiques déterminées pour le premier échelon les caractéristiques d'un deuxième échelon, puis d'un troisième échelon, etc., au total pour tous les échelons, l'angle entre la surface réfléchissante et le côté d'entrée de chaque échelon étant choisi de façon qu'une partie iii du rayon marginal extérieur a fasse dans cette zone un angle aussi petit que possible avec la surface d'entrée,

e) enfin, pour une zone centrale (partie centrale 15) de la lentille (10) ne présentant pas de surfaces réfléchissantes sont déterminées les caractéristiques d'une surface d'entrée courbe (surface intérieure 28) avec observation de la condition eiconale et prescription de la surface de sortie (13),

f) la forme extérieure complète de la lentille (10) est déterminée par rotation de la section radiale (14) autour d'un axe (axe x).

**2.** Procédé selon la revendication 1, **caractérisé par le fait que** la section radiale est déterminée par échelons, à savoir en commençant par l'échelon extérieur 1 et progressant d'échelon en échelon vers l'intérieur.

**3.** Procédé selon l'une des revendications 1 et 2, **caractérisé par le fait que** les conditions suivantes sont imposées :

- les angles $\alpha_{A1}$ entre les côtés d'entrée (22) de tous les échelons (i) et l'axe (axe x) sont égaux à 0,

- les sections des côtés d'entrée et des surfaces réfléchissantes sont planes et les sections s'étendent le long de l'axe (axe x) de la lentille (10) et en même temps en direction radiale.

4. Procédé selon l'une des revendications 1, 2 et 3, **caractérisé par le fait que** l'angle $\delta_1$ entre la surface réfléchissante et l'axe (x) est déterminé par itération et ce par variation jusqu'à ce que la partie de rayon iii entre la surface réfléchissante et la surface de sortie (13) pour le rayon marginal intérieur b de ce premier échelon se situe au point de coordonnées (flx$_1$, fly$_1$).

5. Procédé selon la revendication 4, **caractérisé par le fait qu'**à la jonction d'une premier échelon au deuxième échelon (intérieur) voisin est d'abord admise une valeur estimée de la coordonnée x du point de coin A$_2$ du deuxième échelon, à savoir x$_{A2}$,
que sur la base des domaines angulaires prédéterminés dans lesquels les échelons reçoivent de la lumière et sur la base des angles prédéterminés $\alpha_{Ai}$ des côtés supérieurs des échelons i sont calculées la coordonnée y du point de coin A$_2$ et ainsi du premier point (x$_{A2}$, y$_{A2}$),
qu'ensuite, l'angle $\delta_2$ entre la surface réfléchissante du deuxième échelon et l'axe x est déterminé par itération jusqu'à ce que la partie de rayon iii pour un rayon marginal intérieur b du deuxième échelon se situe au point de coordonnées (flx$_2$, fly$_2$), ce point (flx$_2$, fly$_2$) devant correspondre aux coordonnées les plus proches (flx$_1$, fly$_1$) du premier échelon,
que l'angle entre le rayon marginal intérieur b du deuxième échelon et le rayon marginal extérieur a du premier échelon avant la sortie de la lentille est vérifié et réduit au minimum par variation de x$_{A2}$ et ensuite itération de $\delta_2$, et qu'ensuite, avec observation de la condition eiconale, sont déterminés les autres points (flx$_2$, fly$_2$) du deuxième échelon.

6. Procédé selon au moins une des revendications précédentes, **caractérisé par le fait que** l'angle $\delta_1$ entre la surface réfléchissante du premier échelon et l'axe x, en cas d'angle droit entre le rayon marginal extérieur a et la surface d'entrée (12), est choisi supérieur à 45° et le plus près possible de 45°.

7. Procédé selon au moins une des revendications précédentes, **caractérisé par le fait que** la zone centrale (partie centrale 15) de la lentille (10) présente une surface de sortie (13) plane.

8. Procédé selon au moins une des revendications précédentes, **caractérisé par le fait que** la zone centrale (partie centrale 15) de la lentille (10) présente une surface de sortie (13) qui est convexe dans le prolongement des différents échelons.

9. Lentille à échelons réalisée par un procédé selon une ou plusieurs des revendications 1 à 8.

Fig. 1

Fig. 2

Fig. 3

Fig. 4

$$\alpha + \alpha_1 + \eta_1 - \delta = 90°$$

Fig. 5